# EUROPÄISCHE PATENTANMELDUNG

(11) **EP 3 588 850 A1**
(43) Veröffentlichungstag der Anmeldung: **01.01.2020**
(21) Anmeldenummer: 18179017.1
(22) Anmeldetag: 21.06.2018
(51) Int. Cl.: H04L 12/24

(54) **VERFAHREN ZUM ERKENNEN EINER INKOMPATIBILITÄT UNTER FUNKTIONSEINHEITEN ZUM GEMEINSAMEN BEREITSTELLEN EINER STEUERFUNKTION; STEUEREINRICHTUNG; SYSTEM; COMPUTERPROGRAMM; SOWIE SPEICHERMEDIUM**

(71) Anmelder: Siemens Aktiengesellschaft, 80333 München (DE)
(72) Erfinder: Schall, Daniel, 1220 Wien (AT)

(57) **Zusammenfassung**

Die Erfindung betrifft ein Verfahren zum Erkennen einer Inkompatibilität zwischen mehreren Funktionseinheiten (9), wobei die mehreren Funktionseinheiten (9) eine Steuerfunktion zum Steuern und/oder Überwachen einer Gerätschaft (6) gemeinsam bereitstellen und die mehreren Funktionseinheiten (9) hierzu untereinander zur Kommunikation ausgebildet sind. Um eine verbesserte Erkennung von Inkompatibilitäten zwischen den Funktionseinheiten (9) zu ermöglichen, sind folgende Schritte vorgesehen:
b) Bestimmen, ob eine Änderung einer Funktionsweise eine Änderung einer Kommunikation bei einer ersten (1) der mehreren Funktionseinheiten (9) herbeiführt,
c) Bestimmen einer zweiten (2) der mehreren Funktionseinheiten (9), welche zur Kommunikation mit der ersten Funktionseinheit (1) ausgebildet ist, und
d) Bestimmen anhand der Kommunikation zwischen der ersten Funktionseinheit (1) und der zweiten Funktionseinheit (2), ob eine Inkompatibilität zwischen der ersten Funktionseinheit (1) und der zweiten Funktionseinheit (2) vorliegt.

## Beschreibung

Die Erfindung betrifft ein Verfahren zum Quantifizieren der Zuverlässigkeit einer Steuerfunktion für eine Gerätschaft. Ein zweiter Aspekt der Erfindung betrifft eine Steuereinrichtung mit Mitteln zum Durchführen eines solchen Verfahrens. Ein weiterer Aspekt der Erfindung betrifft ein System mit einer solchen Steuereinrichtung. Zur Erfindung gehören außerdem ein Computerprogramm mit Programmcodemitteln, ein Speichermedium sowie ein Datenstrom.

Gerätschaften, insbesondere industriell genutzte Produktionsgerätschaften im weitesten Sinne, und/oder deren Funktionseinheiten können miteinander vernetzt werden. Beispiele für Gerätschaften sind einzelne Produktionsanlagen, Produktionsmaschinen, Sensoren und Aktoren beziehungsweise Motoren. Bei den genannten Beispielen ergibt sich die Systematik, dass eine Produktionsmaschine jeweils zumindest einen Sensor und/oder zumindest einen Aktor beziehungsweise Motor aufweisen kann. Eine Produktionsanlage wiederum kann eine oder mehrere Produktionsmaschinen aufweisen. Es können beispielsweise Gerätschaften unterschiedlicher Hierarchieebenen miteinander vernetzt werden. Wie im Beispiel genannt können dabei auch kleinste Einheiten der Produktionsanlagen, beispielsweise die Sensoren oder Aktoren beziehungsweise Motoren, als eigenständiger Teil mit dem Netzwerk verbunden werden. Dieses Prinzip wird auch als "Internet of Things", zu Deutsch "Internet der Dinge", bezeichnet. Im industriellen Maßstab wird dies auch als Industrie 4.0 bezeichnet, welche durch die feingliedrige und eigenständige Vernetzung der einzelnen Gerätschaften ein besonders hohes Maß an Produktivität und Flexibilität ermöglicht. Dies ist zudem in den europäischen Patentanmeldungen mit den Siemens-Aktenzeichen 201803975 und 201803976 beschrieben.

Zur Steuerung und/oder Wartung derartiger Gerätschaften, können wiederum unterschiedliche Funktionseinheiten vorgesehen sein. Dabei können Steuerfunktionen durch mehrere gleichartige und/oder verschiedenartige Funktionseinheiten im Zusammenspiel erbracht werden. Der Begriff Steuerfunktionen ist im vorliegenden Kontext breit zu verstehen und beinhaltet alle denkbaren Funktionen zum Steuern, Überwachen, Warten und/oder zum Sammeln von Daten. Mit anderen Worten kann durch ein Zusammenspiel der Funktionseinheiten die Steuerung, Überwachung, Wartung und/oder das Sammeln von Daten der Gerätschaften bereitgestellt sein. Selbstverständlich sind die Funktionseinheiten hierzu ebenfalls mit der Gerätschaft und untereinander vernetzt. Die Funktionseinheiten können über Schnittstellen miteinander kommunizieren, um die Steuerfunktion bereitzustellen. Die Kommunikation über die Schnittstellen erfolgt durch den Austausch von Steuersignalen.

Die Funktionseinheiten können in eine Funktionsinstanz, insbesondere einen Mikroprozessoren, geladen werden. Eine Funktionseinheit kann somit ein Computerprogrammprodukt sein, welches die jeweilige Funktionsinstanz auf eine durch die Funktionseinheit vorgegebene Weise programmiert. Beispiele für Funktionsinstanzen sind Nutzergeräte (bspw. Endgeräte oder Rechner (Computer) von Nutzern), lokale Computer oder Server der Gerätschaft (bspw. ein Mikroprozessor oder eine Steuereinheit der jeweiligen Gerätschaft) und dezentrale Cloud-basierte beziehungsweise dezentrale Server (bspw. ein vom Ort der Gerätschaft entfernter Server). Die Funktionseinheiten können beispielsweise durch unterschiedliche oder dieselben Funktionsinstanzen bereitgestellt werden. Mit anderen Worten können die Funktionseinheiten durch eine einzelne Funktionsinstanz oder durch mehrere Funktionsinstanzen bereitgestellt werden. Beispielsweise können mehrere Funktionsinstanzen durch jeweils eine oder mehrere jeweilige Funktionseinheiten programmiert werden. Die Funktionseinheiten zum Bereitstellen der Steuerfunktion können somit über mehrere Funktionsinstanzen verteilt sein.

Um die Funktionsinstanz beziehungsweise die Funktionsinstanzen mit den zur Steuerung, Überwachung und/oder Wartung der Gerätschaft im Einzelfall notwendigen Funktionseinheiten auszustatten, kann eine Programmcodedatenbank vorgesehen sein. Eine solche Programmcodedatenbank kann beispielsweise nach Art eines digitalen Softwaremarktplatzes, auch mit dem englischen Fachbegriff Appstore bezeichnet, bereitgestellt sein. Die notwendigen Funktionseinheiten können aus der Programmcodedatenbank auf der Funktionsinstanz beziehungsweise den Funktionsinstanzen installiert werden. Um einen reibungslosen Produktionsablauf zu gewährleisten, ist es nötig, dass stets ein reibungsloses Zusammenspiel zwischen den einzelnen Funktionseinheiten möglich ist. Aufgrund der Modularität des Systems an Funktionseinheiten muss dieses Zusammenspiel auch für unterschiedliche und wechselnde Konfigurationen an Funktionseinheiten stets gewährleistet sein.

Die Funktionseinheiten beziehungsweise jeweilige Programmcodes der Funktionseinheiten können von Zeit zu Zeit Änderungen unterworfen sein. Dabei kann eine der Funktionseinheiten auch Auswirkungen auf weitere der Funktionseinheiten haben. Daraus können Inkompatibilitäten entstehen. Funktioniert eine weitere Funktionseinheit aufgrund einer Inkompatibilität nicht mehr mit der geänderten Funktionseinheit gemeinsam, so kann dies wiederum weitere Inkompatibilitäten mit nochmals weiteren Funktionseinheiten nach sich ziehen. Es kann sich im Einzelfall eine wellenförmige Ausbreitung von Inkompatibilitäten zwischen den Funktionseinheiten ergeben. Dieses Phänomen wird auch mit dem englischen Fachbegriff "Ripple" bezeichnet.

Es ist Aufgabe der vorliegenden Erfindung, eine verbesserte Erkennung von Inkompatibilitäten zwischen Funktionseinheiten zu ermöglichen.

Diese Aufgabe wird erfindungsgemäß gelöst durch die Gegenstände der unabhängigen Patentansprüche. Vorteilhafte Ausführungsformen und zweckmäßige Weiterbildungen sind Gegenstand der Unteransprüche.

Ein erster Aspekt der Erfindung betrifft ein Verfahren zum Erkennen einer Inkompatibilität zwischen mehreren Funktionseinheiten, wobei die voneinander unabhängigen, mehreren Funktionseinheiten eine oder mehrere Steuerfunktionen zum Steuern und/oder Überwachen einer Gerätschaft gemeinsam bereitstellen und die mehreren Funktionseinheiten hierzu untereinander zur Kommunikation ausgebildet sind, mit den Schritten:
b) Bestimmen, ob eine Änderung einer Funktionsweise eine Änderung einer Kommunikation einer ersten der mehreren Funktionseinheiten herbeiführt,
c) Bestimmen einer zweiten der mehreren Funktionseinheiten, welche zur Kommunikation mit der ersten Funktionseinheit ausgebildet ist, und
d) Bestimmen anhand der Kommunikation zwischen der ersten Funktionseinheit und der zweiten Funktionseinheit, ob eine Inkompatibilität zwischen der ersten Funktionseinheit und der zweiten Funktionseinheit vorliegt.

Die Schritte b) bis d) können in manchen Ausführungsformen exakt in der oben genannten Reihenfolge durchgeführt werden. Im Folgenden ist aus Gründen der Knappheit nur von einer Steuerfunktion zum Steuern und/oder Überwachen der Gerätschaft die Rede. Diese Formulierung schließt jedoch ausdrücklich auch mehrere Steuerfunktionen mit ein.

In dem Schritt b) kann untersucht werden, ob aus der Änderung der Funktionsweise eine Änderung der Art zu kommunizieren für die erste Funktionseinheit resultiert. Mit anderen Worten wird überprüft, ob die Änderung der Funktionsweise einen Einfluss auf eine von der ersten Funktionseinheit abgehenden Kommunikation hat. Die Änderung der Funktionsweise kann beispielsweise auf eine Änderung des Programmcodes der ersten Funktionseinheit zurückzuführen sein. Alternativ oder zusätzlich kann eine solche Änderung der Funktionsweise aufgrund von Änderungen auf Hardwareebene, beispielsweise bei einer Funktionsinstanz, welche mittels der Funktionseinheit programmiert wurde, oder an der Gerätschaft, entstehen. Beispielsweise können sich Daten, Signale, Inhalte und/oder Protokolle, welche Teil der Kommunikation sind, ändern. In einem konkreten Beispiel kann sich beispielsweise die Maßeinheit einer physikalischen Größe, welche im Rahmen der Kommunikation übermittelt wird, verändert werden. In manchen Ausführungsformen der vorliegenden Erfindung wird im Rahmen des Schritts b) ausschließlich überprüft, ob die Änderung der Funktionsweise eine Änderung einer von der ersten Funktionseinheit abgehenden Kommunikation zur Folge hat. Mit anderen Worten wird in diesen Ausführungsformen beispielsweise ausschließlich überprüft, ob Signale verändert werden, welche von der ersten Funktionseinheit gesendet werden.

In dem, insbesondere nachfolgenden, Schritt c) wird die zweite der mehreren Funktionseinheiten bestimmt, welche zur Kommunikation mit der ersten Funktionseinheit ausgebildet ist. In diesem Kontext können selbstverständlich mehrere zweite Funktionseinheiten bestimmt werden. Vorteilhafterweise werden alle diejenigen der mehreren Funktionseinheiten, welche zur Kommunikation mit der ersten Funktionseinheit ausgebildet sind, als jeweilige zweite Funktionseinheiten ermittelt. Sämtliche im Vorherigen und im Nachfolgenden offenbarte Merkmale betreffend die zweite Funktionseinheit gelten somit auch für mehrere zweite Funktionseinheiten. Die zweite Funktionseinheit kann durch eine Empfangsschnittstelle zum Empfangen von Steuersignalen aus der ersten Funktionseinheit gekennzeichnet sein. Insbesondere werden alle diejenigen der mehreren Funktionseinheiten als zweite Funktionseinheiten ermittelt, welche eine jeweilige Empfangsschnittstelle zum Empfangen von Steuersignalen aus der ersten Funktionseinheit aufweisen. Die genannten Steuersignale können hierbei digitale oder analoge Steuersignale sein und insbesondere zum Austausch digitaler Daten vorgesehen sein.

Der Begriff Kommunikation umfasst im Rahmen der vorliegenden Anmeldung sowohl eine bidirektionale Kommunikation als auch eine unidirektionale Kommunikation. Die Kommunikation, zu welcher die zweite Kommunikationseinheit ausgebildet ist, kann beispielsweise unidirektional in Richtung der zweiten Funktionseinheit oder bidirektional zwischen der ersten Funktionseinheit und der zweiten Funktionseinheit erfolgen. In manchen Ausführungsformen, werden nur diejenigen der mehreren Funktionseinheiten, welche zur Kommunikation mit der ersten Funktionseinheit in Richtung der jeweiligen zweiten Funktionseinheit (also eine Kommunikation von der ersten Funktionseinheit in Richtung der jeweiligen zweiten Funktionseinheit) ausgebildet sind, als jeweilige zweite Funktionseinheiten ermittelt. Dies kann unabhängig davon sein, ob von der jeweiligen zweiten Funktionseinheit in Richtung der ersten Funktionseinheit auch eine Kommunikation vorgesehen ist.

In dem Schritt d) kann bestimmt werden, ob sich eine Inkompatibilität zwischen der ersten Funktionseinheit und der zweiten Funktionseinheit beziehungsweise den zweiten Funktionseinheiten ergibt. Insbesondere kann bestimmt werden, ob sich eine solche Inkompatibilität aus der geänderten Funktionsweise der ersten Funktionseinheit ergibt. Vorteilhafterweise wird zum Bestimmen, ob die Inkompatibilität vorliegt, die Kommunikation zwischen der ersten Funktionseinheit und der zweiten Funktionseinheit überprüft. In diesem Fall kann geprüft werden, ob der Einfluss, welchen die Änderung der Funktionsweise auf die Kommunikation der ersten Funktionseinheit aufweist (wie in Schritt b) festgestellt), eine solche Inkompatibilität in der Kommunikation zwischen der ersten Funktionseinheit und der zweiten Funktionseinheit hervorruft beziehungsweise induziert. Auf diese Weise kann eine solche Inkompatibilität auf besonders effektive beziehungsweise ressourcenschonende Weise erkannt werden.

Gemäß einer Weiterbildung ist ein weiterer Schritt a) vorgesehen. In diesem wird insbesondere bestimmt, ob die erste Funktionseinheit beziehungsweise deren Funktionsweise verändert wurde. Beispielweise wird bestimmt oder geprüft, ob sich die erste Funktionseinheit gegenüber einem früheren Zustand verändert hat beziehungsweise ob die Funktion der Funktionseinheit gegenüber einem früheren Zustand verändert wurde. Dabei ist das Bestimmen, ob eine solche Änderung der Funktionsweise vorliegt, einfacher und/oder ressourcenschonender möglich, als den Einfluss einer solchen Änderung auf die Kommunikation der ersten Funktionseinheit zu bestimmen. Vorteilhafterweise wird der Schritt b) nur dann durchgeführt, wenn im Schritt a) die Änderung der Funktionsweise der ersten Funktionseinheit erkannt wird. Auf diese Weise können Ressourcen geschont werden.

Gemäß einer Weiterbildung ist vorgesehen, dass für das Bestimmen, ob eine Änderung der Funktionsweise bei der ersten Funktionseinheit vorliegt, zunächst Informationen über die Funktionsweise der ersten Funktionseinheit gesammelt wird. Insbesondere werden jeweilige Informationen über eine jeweilige Funktionsweise jeder der mehreren Funktionseinheiten gesammelt. Derartige Informationen über die Funktionsweise können technische Dokumentationen zur Kommunikation beziehungsweise zu Schnittstellen der jeweiligen Funktionseinheit umfassen.

Gemäß einer Weiterbildung ist vorgesehen, dass bei dem Bestreben nach Schritt d) dann eine Inkompatibilität zwischen der ersten Funktionseinheit und der zweiten Funktionseinheit erkannt wird, wenn eine Inkompatibilität zwischen jeweiligen Schnittstellen der ersten Funktionseinheit und der zweiten Funktionseinheit und/oder einem Signalformat der Kommunikation vorliegt. Es kann somit beispielsweise überprüft werden, ob ein Signalformat, insbesondere ein Datenformat, Maßeinheiten übermittelter Daten, eine Syntax oder ein Protokoll, eines Signals, welches in einem Normalbetrieb der ersten Funktionseinheit und der zweiten Funktionseinheit von der ersten Funktionseinheit an die zweite Funktionseinheit übermittelt wird, für die zweite Kommunikationseinheit inkompatibel ist.

Dieses inkompatible Signalformat kann darauf zurückzuführen sein, dass sich dieses im Rahmen der Änderung der Funktionsweise der ersten Funktionseinheit geändert hat. Beispielsweise war das Signalformat in dem früheren Zustand der ersten Funktionseinheit kompatibel zu der zweiten Funktionseinheit. Auf diese Weise kann die Inkompatibilität zwischen der ersten Funktionseinheit und der zweiten Funktionseinheit noch effizienter erkannt werden.

Gemäß einer Weiterbildung ist vorgesehen, dass ein Erkennen der Änderung der Funktionsweise der ersten Funktionseinheit bei dem Bestimmen gemäß Schritt a) basierend auf Metadaten, insbesondere einer Versionsnummer, der ersten Funktionseinheit erfolgt. Insbesondere können die Metadaten hierzu vor Durchführen des Schrittes a) aus einer entsprechenden Datenbank abgerufen werden. Insbesondere erfolgt dieses Abrufen und Prüfen der Metadaten, insbesondere der Versionsnummer, wiederholt, vorteilhafterweise regelmäßig oder periodisch. Auf diese Weise kann auf besonders einfache Art und Weise geprüft werden, ob die Änderung der Funktionsweise bei der ersten Funktionseinheit vorliegt.

Alternativ oder zusätzlich kann vorgesehen sein, dass das Bestimmen, ob eine Änderung der Funktionsweise bei der ersten Funktionseinheit vorliegt, durch einen Parser erfolgt. Mit anderen Worten kann der Schritt a), also das beschriebene Bestimmen, durch den Parser durchgeführt werden. Hierbei kann auf grundlegender Ebene, nämlich auf Programmcodeebene, überprüft werden, ob sich die Funktionsweise der ersten Funktionseinheit geändert hat. Durch den Einsatz eines Parsers kann diese Prüfung besonders genau sein.

Gemäß einer Weiterbildung kann vorgesehen sein, dass das Bestimmen gemäß Schritt a) zweistufig durchgeführt wird. Hierbei kann gemäß einem ersten Schritt auf Basis der Metadaten, insbesondere der Versionsnummer, geprüft werden, ob eine Änderung vorliegt. Anschließend kann die Prüfung zusätzlich durch den Parser erfolgen. Dabei kann vorgesehen sein, dass die Prüfung durch den Parser nur dann erfolgt, wenn basierend auf den Metadaten, insbesondere der Versionsnummer, festgestellt wurde, dass eine Änderung der Funktionsweise der ersten Funktionseinheit vorliegt.

Alternativ oder zusätzlich kann Schritt b), also das Bestimmen, ob die Änderung der Funktionsweise eine Änderung der Kommunikation der ersten Funktionseinheit herbeiführt, durch den Parser durchgeführt werden. Mit anderen Worten kann der Schritt b) durch den Parser durchgeführt werden. Hierbei kann auf grundlegender Ebene, nämlich auf Programmcodeebene, bestimmt werden, ob die Änderung der Funktionsweise einen Einfluss auf die Kommunikation der ersten Funktionseinheit aufweist oder ob die Änderung der Funktionsweise eine Änderung der Kommunikation der ersten Funktionseinheit herbeiführt. Dies gilt unabhängig davon, ob das Bestimmen gemäß Schritt a) durch den Parser durchgeführt wird. Durch den Einsatz eines Parsers kann dieses Bestimmen besonders genau sein.

Es kann somit vorgesehen sein, dass der Schritt a) und/oder der Schritt b) zumindest teilweise durch einen Parser durchgeführt wird. Hierzu können somit drei unterschiedliche Ausführungsformen vorgesehen sein: Ausschließlich Schritt a) wird ganz oder teilweise durch einen Parser durchgeführt, ausschließlich Schritt b) wird ganz oder teilweise durch einen Parser durchgeführt oder Schritt a) und Schritt b) werden jeweils zumindest teilweise durch einen Parser durchgeführt. Durch den Parser kann einerseits die Änderung der Funktionsweise besonders zuverlässig erkannt werden und andererseits der Einfluss auf die Kommunikation der ersten Funktionseinheit zuverlässig bestimmt werden.

Gemäß einer Weiterbildung ist vorgesehen, dass eine Versionshistorie, welche zumindest eine Beschreibung der Funktionsweise der ersten Funktionseinheit vor und nach der Änderung der Funktionsweise beinhaltet, in einer Versionsdatenbank gespeichert wird. Insbesondere wird eine jeweilige Beschreibung der Funktionsweise der ersten Funktionseinheit in dem früheren Zustand und nach der Änderung der Funktionsweise gespeichert. Die jeweiligen Beschreibungen können dabei zu unterschiedlichen Zeitpunkten in der Versionsdatenbank gespeichert werden. Beispielsweise wurde die Beschreibung der Funktionsweise vor der Änderung in der Versionsdatenbank gespeichert, bevor die Änderung der Funktionsweise stattgefunden hat. Mit der Versionshistorie können Änderungen der Funktionsweise besonders gut nachvollzogen werden.

Insbesondere ist vorgesehen, dass in der Versionsdatenbank eine jeweilige Beschreibung einer jeweiligen Funktionsweise jeder der mehreren Funktionseinheiten gespeichert ist. Dabei kann nach jeder Änderung der Funktionsweise einer der mehreren Funktionseinheiten eine neue Beschreibung in der Versionsdatenbank gespeichert werden, wobei die neue Beschreibung die Funktionsweise der jeweiligen Funktionseinheit nach der Änderung beschreibt. Auf diese Weise ist die Nachvollziehbarkeit von Änderungen an jeder der mehreren Funktionseinheiten gewährleistet.

Gemäß einer Weiterbildung ist vorgesehen, dass ein jeweiliger Programmcode für jede der mehreren Funktionseinheiten von einer Programmcodedatenbank wiederholt geladen wird und nach jedem Laden zumindest die Schritte b) bis d) durchgeführt werden. Mit anderen Worten sind die jeweiligen Programmcodes für jede der mehreren Funktionseinheiten in der Programmcodedatenbank gespeichert beziehungsweise zur Programmierung von Funktionsinstanzen bereitgehalten. Aus dieser Programmcodedatenbank können die jeweiligen Programmcodes zum Durchführen zumindest der Schritte b) bis d) wiederholt geladen werden. Auf diese Weise steht zum Durchführen der Schritte b) bis d) jeweils die aktuellste Version des jeweiligen Programmcodes für jede der mehreren Funktionseinheiten bereit.

Gemäß einer Weiterbildung ist vorgesehen, dass ein Programmcode für die zweite Funktionseinheit nur dann von der Programmcodedatenbank geladen wird, wenn in Schritt a) erkannt wurde, dass eine Änderung der Funktionsweise der ersten Funktionseinheit vorliegt. Mit anderen Worten wird in dem Schritt a) geprüft, ob sich die Funktionsweise gegenüber dem früheren Zustand geändert hat. Nur wenn dies der Fall ist, wird anschließend der Programmcode für die zweite Funktionseinheit aus der Programmcodedatenbank geladen.

Gemäß einer Weiterbildung ist vorgesehen, dass im Schritt a) für jede der mehreren Funktionseinheiten überprüft wird, ob eine jeweilige Änderung der Funktionsweise gegenüber einem jeweiligen früheren Zustand vorliegt und ein jeweiliger Programmcode genau derer der mehreren Funktionseinheiten, bei welchen eine Änderung der Funktionsweise vorliegt, von der Programmcodedatenbank geladen wird. Dies ist insbesondere dann vorteilhaft, wenn in der Versionsdatenbank der jeweilige Programmcode für jede der Funktionseinheiten gespeichert ist. In diesem Fall kann vorgesehen sein, dass bei denjenigen der mehreren Funktionseinheiten, bei welchen eine Änderung der Funktionsweise vorliegt, der jeweilige Programmcode von der Programmcodedatenbank geladen wird und bei denjenigen der mehreren Funktionseinheiten, bei welchen keine Änderung der Funktionsweise vorliegt, der jeweilige Programmcode von der Versionsdatenbank geladen wird. Dies ist insbesondere dann sinnvoll, wenn es sich bei der Programmcodedatenbank um eine räumlich entfernte Datenbank handelt, welche insbesondere in einer räumlich entfernten Servereinrichtung gespeichert ist. Auf diese Weise kann ein Datenverkehrsaufkommen auf ein Minimum reduziert werden.

Gemäß einer Weiterbildung ist vorgesehen, dass eine dritte der mehreren Funktionseinheiten bestimmt wird, welche zur Kommunikation mit der zweiten Funktionseinheit ausgebildet ist und bestimmt, ob eine Inkompatibilität zwischen der ersten Funktionseinheit und der dritten Funktionseinheit oder der zweiten Funktionseinheit und der dritten Funktionseinheit vorliegt. Insbesondere ist vorgesehen, dass die dritte der mehreren Funktionseinheiten bestimmt wird, welche zur Kommunikation mit der zweiten Funktionseinheit ausgebildet ist, und davon abhängig bestimmt wird, ob sich aus der geänderten Funktionsweise der ersten Funktionseinheit eine Inkompatibilität zwischen der ersten Funktionseinheit und der dritten Funktionseinheit oder der zweiten Funktionseinheit und der dritten Funktionseinheit ergibt. Die dritte Funktionseinheit kann mittelbar, nämlich über die zweite Funktionseinheit, mit der ersten Funktionseinheit verbunden sein. Aus diesem Grund kann die Änderung der Funktionsweise der ersten Funktionseinheit auch eine Inkompatibilität bei der dritten Funktionseinheit zur Folge haben. Diese Inkompatibilität bei der dritten Funktionseinheit kann beispielsweise zwischen der ersten Funktionseinheit und der dritten Funktionseinheit und/oder zwischen der zweiten Funktionseinheit und der dritten Funktionseinheit auftreten. Durch diese weiterführende Prüfung kann eine wellenartige Ausbreitung von Inkompatibilitäten ("Rippels") besonders effizient vermieden werden. Selbstverständlich können zur noch besseren Erkennung solche Inkompatibilitäten auch vierte Funktionseinheit ermittelt werden, welche wiederum von den dritten Funktionseinheiten abhängig sind. Allgemein können jeweils n-te Funktionseinheiten bestimmt werden, welche jeweils von (n-1)-ten Funktionseinheiten abhängig sind. Dabei kann n beliebig groß werden.

Gemäß einer Weiterbildung ist vorgesehen, dass der Schritt a) wiederholt, insbesondere periodisch, durchgeführt wird. Mit anderen Worten kann wiederholt, insbesondere regelmäßig oder periodisch, geprüft werden, ob eine Änderung der Funktionsweise der ersten Funktionseinheit vorliegt. Insbesondere werden die Schritte b) jeweils nur dann durchgeführt, wenn in dem Schritt a) eine veränderte Funktionsweise erkannt wurde. Auf diese Weise kann der ressourcenschonend durchzuführende Schritt a) regelmäßig durchgeführt werden, während die ressourcenintensiveren Schritte b) bis d) nur dann durchgeführt werden, wenn dies nötig ist.

Die mehreren Funktionseinheiten können zum Bereitstellen der Steuerfunktion jeweils als Datenquelle, Steuereinheit, Wartungseinheit und/oder Überwachungseinheit genutzt werden. Mit anderen Worten können die mehreren Funktionseinheiten jeweils zum Bereitstellen von Daten, Ausgeben von Steuerbefehlen, Sammeln von Wartungsdaten beziehungsweise Betriebsdaten und/oder zum Überwachen der Gerätschaft vorgesehen sein beziehungsweise ausgebildet sein. Allgemein können die Funktionseinheiten jeweils zum Bereitstellen beliebiger Funktionen ausgebildet sein beziehungsweise genutzt werden.

Gemäß einer Weiterbildung ist vorgesehen, dass die genannten Schritte aus Sicht der ersten Funktionseinheit für jede der mehreren Funktionseinheiten durchgeführt werden. Mit anderen Worten wird jede der mehreren Funktionseinheiten als die erste Funktionseinheit aufgefasst und die in Bezug auf die erste Funktionseinheit genannten Schritte durchgeführt. Dies gilt insbesondere für die Schritte a) bis d), welche für alle der mehreren Funktionseinheiten aus durchgeführt werden. Dabei kann die jeweilige der mehreren Funktionseinheiten, für welche die die Schritte a) bis d) gerade durchgeführt werden, als die erste Funktionseinheit aufgefasst werden. Auf diese Weise ergibt sich eine umfassendere Auswertung von Inkompatibilitäten zwischen den mehreren Funktionseinheiten.

Gemäß einer Weiterbildung ist vorgesehen, dass eine Übersicht über die jeweiligen Inkompatibilitäten jeder der mehreren Funktionseinheiten erzeugt wird und automatisch Maßnahmen zum Eindämmen jeweiliger Inkompatibilitäten getroffen werden, insbesondere ein Anpassen der jeweiligen Kommunikation, ein Einschränken der jeweiligen Kommunikation oder ein Erstellen von Brückenschnittstellen für die jeweilige Kommunikation. Diese jeweilige Kommunikation betrifft die Kommunikation zwischen den als inkompatibel erkannten Funktionseinheiten. Alternativ oder zusätzlich, ist vorgesehen, dass die Übersicht über die jeweiligen Inkompatibilitäten jeder der mehreren Funktionseinheiten erzeugt wird und einem Nutzer, insbesondere in Verbindung mit Verbesserungsvorschlägen, bereitgestellt wird. In der Übersicht können die Ergebnisse des Durchführens der Schritte a) bis d) für jede der mehreren Funktionseinheiten in der Übersicht zusammengefasst werden. In der Übersicht kann beispielsweise zusammengefasst werden, wie viele derartige Inkompatibilitäten mit direkt (zweite) oder indirekt (dritte, n-te) abhängigen Funktionseinheiten eine jeweilige der mehreren Funktionseinheit aufweist. Außerdem können dem Nutzer Verbesserungsvorschläge beziehungsweise Möglichkeiten unterbreitet werden, um diese Inkompatibilitäten zu beseitigen. Die Maßnahmen zum Eindämmen jeweiliger Inkompatibilitäten sind beispielsweise: Das Anpassen der jeweiligen Kommunikation (beispielweise Anpassen einer Schnittstelle oder des Signalformats, insbesondere eines Datenformats, Maßeinheiten übermittelter Daten, einer Syntax oder eines Protokolls) betroffener Funktionseinheiten, das Einschränken der Kommunikation zwischen den betroffenen Funktionseinheiten und das Erstellen der sogenannten Brückenschnittstellen zwischen den betroffenen Funktionseinheiten. Derartige Brückenschnittstellen (auch mit dem Fachbegriff "intermediates" bezeichnet), können zwischen den betroffenen Funktionseinheiten angeordnet werden und deren Kommunikation anpassen. Dabei kann eine Brückenschnittstelle beispielsweise ein Signalformat der ausgehenden Kommunikation der ersten Funktionseinheit an ein Signalformat der eingehenden Kommunikation der zweiten Funktionseinheit anpassen. Durch das Einschränken der Kommunikation kann eine Abhängigkeit der Funktionseinheiten untereinander verringert werden und so der Inkompatibilität entgegengewirkt werden. Beim Anpassen der jeweiligen Kommunikation können die betroffenen Funktionseinheiten selbst angepasst werden.

Ein zweiter Aspekt der Erfindung betrifft eine Steuereinrichtung mit Mitteln zum Quantifizieren der Zuverlässigkeit einer Steuerfunktion für eine Gerätschaft, wobei die Mittel eingerichtet sind, ein oben genanntes Verfahren zum Quantifizieren der Zuverlässigkeit einer Steuerfunktion durchzuführen. Dabei können die Mittel der Steuereinrichtung zur Durchführung von zuvor oder nachfolgend beschriebenen Verfahrensschritten in allen offenbarten und nicht offenbarten Kombinationen ausgebildet sein. Bei der Steuereinrichtung kann es sich um einen zentralen Server, eine Cloud, ein clientseitiges Rechengerät, insbesondere einen Personalcomputer oder einen tragbarer Computer, ein Tabletcomputer oder ein Smartphone handeln. Alternativ kann die Steuereinrichtung durch ein Netzwerk aus mehreren unterschiedlichen oder gleichartigen Geräten, insbesondere der genannten Geräte, gebildet sein. Die oben in Bezug auf das erfindungsgemäße Verfahren genannten Merkmale und Weiterbildungen sowie deren Vorteile sind auch auf die erfindungsgemäße Steuereinrichtung übertragbar.

Ein weiterer Aspekt der Erfindung betrifft ein System umfassend
- eine Gerätschaft,
- zumindest eine Funktionsinstanz zum Bereitstellen von mehreren Funktionseinheiten, wobei die mehreren Funktionseinheiten dazu ausgebildet sind, eine Steuerfunktion zum Steuern und/oder Überwachen der Gerätschaft gemeinsam bereitzustellen und hierzu untereinander zu kommunizieren,
- einer Programmcodedatenbank, welche dazu ausgebildet ist, einen jeweiligen Programmcode für jede der mehreren Funktionseinheiten zur Programmierung der zumindest einen Funktionsinstanz bereitzuhalten, und
- der zuvor genannten Steuereinrichtung.

Bei der Gerätschaft handelt es sich insbesondere um eine industriell genutzte Produktionsgerätschaft im weitesten Sinne. Beispiele für Gerätschaften sind somit einzelne Produktionsanlagen, Produktionsmaschinen, Sensoren und Aktoren beziehungsweise Motoren.

Die mehreren Funktionseinheiten können zum Programmieren der zumindest einen Funktionsinstanz ausgebildet sein. Beispiele für Funktionsinstanzen sind Nutzergeräte (bspw. Endgeräte oder Rechner (Computer) von Nutzern), lokale Computer oder Server der Gerätschaft (bspw. ein Mikroprozessor oder eine Steuereinheit der jeweiligen Gerätschaft) und dezentrale Cloud-basierte beziehungsweise dezentrale Server (bspw. ein vom Ort der Gerätschaft entfernter Server). Die Funktionseinheiten können beispielsweise durch unterschiedliche oder dieselben Funktionsinstanzen bereitgestellt werden. Mit anderen Worten können die Funktionseinheiten in einem Normalbetriebszustand durch eine einzelne Funktionsinstanz oder durch mehrere Funktionsinstanzen bereitgestellt werden.

Zur Erfindung gehört außerdem ein Computerprogramm, welches direkt in einen Speicher einer erfindungsgemäßen Steuereinrichtung ladbar ist, mit Programmcodemitteln, um die Schritte des erfindungsgemäßen Verfahrens auszuführen, wenn das Programm in der Steuereinrichtung ausgeführt wird. Das erfindungsgemäße Computerprogramm implementiert das erfindungsgemäße Verfahren auf einer erfindungsgemäßen Steuereinrichtung, wenn es auf der Steuereinrichtung ausgeführt wird. Dementsprechend gehört zur Erfindung außerdem ein Speichermedium mit darauf gespeicherten elektronisch lesbaren Steuerinformationen, welche zumindest das genannte Computerprogramm umfassen und derart ausgestaltet sind, dass sie bei Verwendung des Speichermediums in einer erfindungsgemäßen Steuereinrichtung das erfindungsgemäße Verfahren durchführen. Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Ein weiterer Aspekt der Erfindung betrifft einen Datenstrom an Daten zum Erkennen einer Inkompatibilität zwischen Funktionseinheiten, wobei der Datenstrom zumindest teilweise mittels eines erfindungsgemäßen Verfahrens gewonnen wurde.

Zur Erfindung gehört außerdem ein Verfahren zum Speichern von Daten, welche zumindest teilweise mittels eines erfindungsgemäßen Verfahrens gewonnen wurden, auf ein weiteres Speichermedium. Bei diesen Daten kann es sich um den obengenannten Datenstrom handeln. Das weitere Speichermedium kann beispielsweise zum digitalen oder analogen Speichern von Daten eingerichtet sein. Das weitere Speichermedium kann, einfach oder mehrfach beschreibbar, flüchtig (volatil) oder nicht flüchtig sein.

Die vorliegende Erfindung wird nun anhand der beigefügten Zeichnungen näher erläutert, in denen zeigen:
- FIG 1: in einem Blockdiagramm mehrere Funktionseinheiten, welche zur Kommunikation untereinander ausgebildet sind;
- FIG 2: in einem Blockdiagramm einen Überblick über ein System, in welchem die Funktionseinheiten verwendet werden; und
- FIG 3: ein Ablaufdiagramm einer beispielhaften Ausführungsform des vorliegenden Verfahrens.

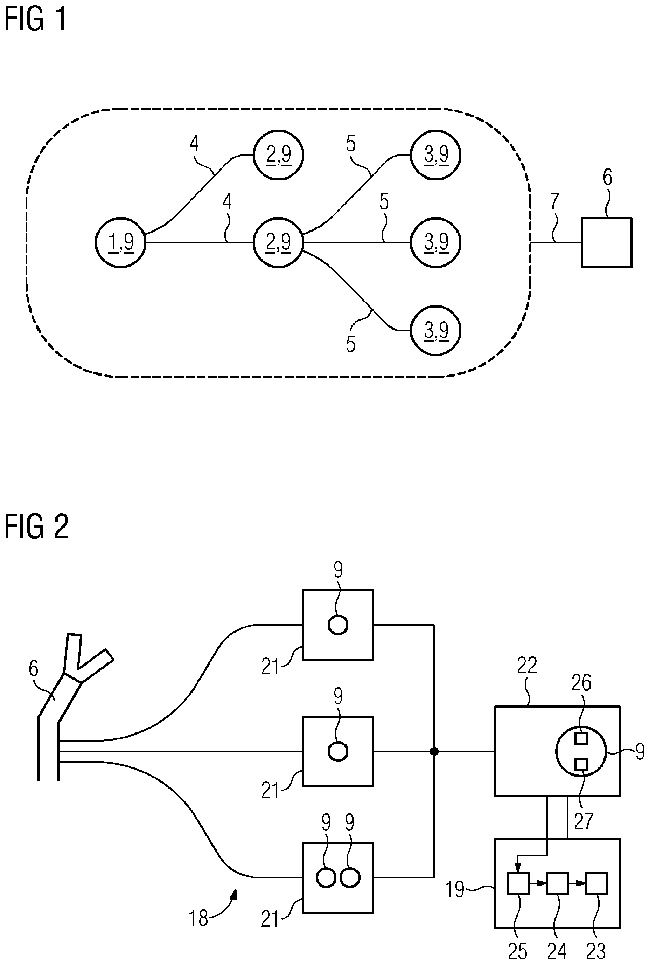

Die FIG 1 zeigt mehrere Funktionseinheiten 9, welche dazu ausgebildet sind, gemeinsam eine Steuerfunktion für eine Gerätschaft 6 bereitzustellen. Die Funktionseinheiten 9 sind hierzu untereinander vernetzt. Die Funktionseinheiten 9 weisen untereinander Verbindungen 4, 5 zur Kommunikation untereinander auf. Mit anderen Worten können die Funktionseinheiten 9, insbesondere in einem Normalbetrieb der Funktionseinheiten 9, über die Verbindungen 4, 5 miteinander kommunizieren. Dabei kann im Allgemeinen die Kommunikation über jede der Verbindungen 4,5 unidirektional oder bidirektional vorgesehen sein.

Die Funktionseinheiten 9 sind gemeinsam mit der Gerätschaft 6 vernetzt. Dabei kann/können nur eine einzelne der Funktionseinheiten 9, mehrere der Funktionseinheiten 9 oder alle der Funktionseinheiten 9 über eine jeweilige Verbindung, insbesondere Datenverbindung, mit der Gerätschaft 6 verbunden sein. Um die Vernetzung 7 der Funktionseinheiten 9 mit der Gerätschaft 6 kenntlich zu machen, sind die Funktionseinheiten 9 in der FIG 1 umkreist und die Vernetzung 7 ist durch eine Verbindunglinie kenntlich gemacht.

Bei der Gerätschaft 6 handelt es sich beispielsweise um einen einzelnen Sensor und/oder Aktor beziehungsweise Motor einer Produktionsmaschine, eine Produktionsmaschine, mehrere Produktionsmaschinen oder eine ganze Anlage, insbesondere Produktionsanlage.

Die Funktionseinheiten 9 stellen nun die Steuerfunktion für die Gerätschaft 6 bereit. Die Steuerfunktion kann beispielsweise eine oder mehrere der folgenden Aufgaben umfassen: Steuerung, Überwachung, Wartung, Sammeln von Daten (aus der Gerätschaft 6 und/oder externer Daten) und/oder Bereitstellen einer Nutzerschnittstelle um eine Bedienung der Gerätschaft 6 durch einen Nutzer zu ermöglichen. Dabei können unterschiedliche Aufgaben oder sogar gleiche Aufgaben auf unterschiedliche der Funktionseinheiten 9 aufgeteilt sein. Die Steuerfunktion wird somit modular durch die Funktionseinheiten 9 geleistet beziehungsweise bereitgestellt. Die Steuerfunktion kann an einen Nutzungsfall angepasst werden, indem den Funktionseinheiten 9 neue Funktionseinheiten hinzugefügt werden und/oder einzelne Funktionseinheiten aus den mehreren Funktionseinheiten 9 entfernt werden. Durch diesen modularen Aufbau ergibt sich eine große Anzahl unterschiedlicher Kombinationsmöglichkeiten für derartige Funktionseinheiten 9. Es ist daher von großem Interesse, ob Inkompatibilitäten zwischen den Funktionseinheiten 9 auftreten.

Die Kommunikation der Funktionseinheiten 9, beispielsweise über die Verbindungen 4, 5, kann nötig sein, um das gemeinsame Erbringen beziehungsweise Bereitstellen der Steuerfunktion durch die Funktionseinheiten 9 zu ermöglichen. Treten Inkompatibilitäten zwischen den Funktionseinheiten 9 auf, so kann die Bereitstellung der Steuerfunktion teilweise oder vollständig gestört werden. Inkompatibilitäten zwischen den Funktionseinheiten 9 können insbesondere dann auftreten, wenn eine der Funktionseinheiten 9 verändert, erweitert oder aktualisiert wird. Inkompatibilitäten treten dabei ausschließlich oder größtenteils zwischen Funktionseinheiten 9 auf, welche miteinander kommunizieren.

FIG 2 zeigt ein System 18, welches die Gerätschaft 6, zumindest eine Funktionsinstanz 21 (vorliegend mehrere Funktionsinstanzen 21), eine Programmcodedatenbank 22 sowie eine Steuereinrichtung 19 aufweist. Die Funktionsinstanzen 21 können jeweils einen Computer beziehungsweise eine Recheneinheit, insbesondere einen Mikroprozessor, umfassen. Beispiele für Funktionsinstanzen 21 sind Nutzergeräte (bspw. mobile Endgeräte, Laptops oder Rechner (Computer) von Nutzern), lokale Computer oder Server der Gerätschaft 6 (bspw. ein Mikroprozessor oder eine Steuereinheit der Gerätschaft 6) und die zentrale Cloud-basierte beziehungsweise dezentrale Server (bspw. ein vom Ort der Gerätschaft 6 entfernter Server). Die Funktionsinstanzen 21 können jeweils durch eine oder mehrere der Funktionseinheiten 9 programmiert werden. Die Kommunikation zwischen zweier der Funktionseinheiten 9 (bspw. über eine der Verbindungen 4, 5) kann somit innerhalb derselben Funktionsinstanz 21 oder zwischen zwei Funktionsinstanzen 21 erfolgen. Mit anderen Worten können zwei Funktionseinheiten 9, welche in dieselbe Funktionsinstanz 21 oder in unterschiedliche Funktionsinstanzen 21 geladen sind, miteinander kommunizieren. Beispielsweise können einzelne der Verbindungen 4, 5 jeweils innerhalb derselben Funktionsinstanz 21 oder zwischen zwei der Funktionsinstanzen 21 vorhanden sein.

Die Programmcodedatenbank 22 kann beispielsweise als ein/der Softwaremarktplatz ausgeführt sein. Die Programmcodedatenbank 22 kann zum Bereitstellen der Funktionseinheiten 9 für die Funktionsinstanzen 21 ausgebildet sein. Somit können die Funktionseinheiten 9 aus der Programmcodedatenbank 22 auf jeweilige der Funktionsinstanzen 21 geladen beziehungsweise installiert werden.

Die Steuereinrichtung 19 weist eine Bereitstellungseinheit 25 auf. Die Bereitstellungseinheit 25 ist vorliegend dazu ausgebildet, jeweilige Programmcodes 26 und/oder jeweilige Metadaten 27 der Funktionseinheiten 9 aus der Programmcodedatenbank 22 abzurufen beziehungsweise zu laden.

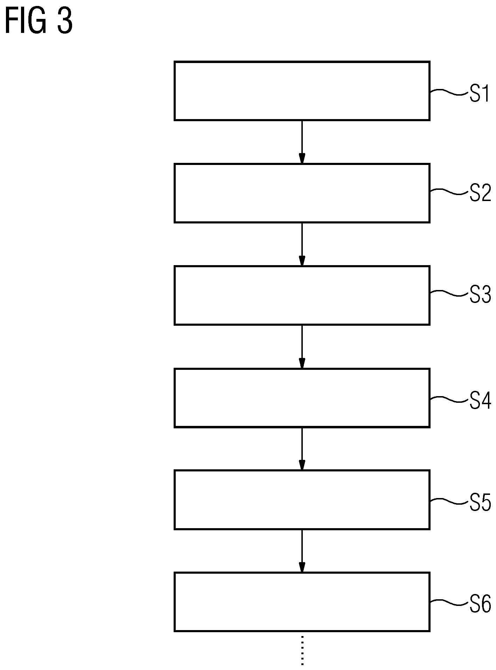

Inkompatibilitäten zwischen den Funktionseinheiten 9 treten insbesondere nach der Änderung der Funktionsweise einer der mehreren Funktionseinheiten 9 auf. Eine solche Änderung der Funktionsweise kann aus einer Umprogrammierung, Aktualisierung, Veränderung oder Erweiterung der jeweiligen Funktionseinheit 9 resultieren. Aus diesem Grund wird zum Erkennen der Inkompatibilität zunächst geprüft, ob eine Änderung der Funktionsweise gegenüber einem früheren Zustand bei einer ersten Funktionseinheit 1 der mehreren Funktionseinheiten 9 vorliegt. Dieses Bestimmen kann als Schritt a) bezeichnet werden und ist in FIG 3 als Schritt S1 dargestellt. Das Bestimmen gemäß Schritt a) kann beispielsweise auf Basis von Metadaten 27, insbesondere einer Versionsnummer, der ersten Funktionseinheit 1 durchgeführt werden. In diesem Fall kann die Steuereinrichtung 19, insbesondere die Bereitstellungseinheit 25, wiederholt, insbesondere regelmäßig oder periodisch, die Metadaten 27, insbesondere die Versionsnummer, aus der Programmcodedatenbank 22 abrufen. Die abgerufenen Metadaten 27 können mit Metadaten 27 verglichen werden, welche in einer Versionsdatenbank 23 der Steuereinrichtung 19 gespeichert sind. Haben sich die Metadaten 27, insbesondere die Versionsnummer, gegenüber einem früheren Zustand, insbesondere seit dem letzten Abrufen der Metadaten 27, insbesondere der Versionsnummer verändert, so kann vorgegeben werden, dass sich die Funktionsweise geändert hat. Alternativ kann das Bestimmen gemäß Schritt a) durch einen Parser 24 der Steuereinrichtung 19 durchgeführt werden. In diesem Fall kann ein aktueller Programmcode 26 der ersten Funktionseinheit 1 durch die Steuereinrichtung 19, insbesondere die Bereitstellungseinheit 25, aus der Programmcodedatenbank 22 abgerufen werden. Der abgerufene Programmcode 26 kann dann durch den Parser 24 analysiert werden. Zusätzlich kann durch den Parser 24 ein älterer Programmcode 26 der ersten Funktionseinheit 1 analysiert werden, welcher in der Versionsdatenbank 23 gespeichert ist. Der ältere Programmcode 26 kann zu einem früheren Zeitpunkt durch die Steuereinrichtung 19, insbesondere die Bereitstellungseinheit 25, von der Programmcodedatenbank 22 abgerufen worden sein und in der Versionsdatenbank 23 gespeichert worden sein. Durch Vergleichen jeweiliger Ergebnisse des Analysierens des Programmcodes 26 der ersten Funktionseinheit 1 und des älteren Programmcodes 26 der ersten Funktionseinheit 1 kann bestimmt werden, ob eine Änderung der Funktionsweise der ersten Funktionseinheit 1 vorliegt.

Falls eine Änderung der Funktionsweise der ersten Funktionseinheit 1 erkannt wurde, so wird in einem Schritt b) bestimmt, ob die Änderung der Funktionsweise eine Änderung der Kommunikation der ersten Funktionseinheit 1 herbeiführt. Der Schritt b) ist in FIG 3 als Schritt S2 dargestellt. Hierzu wird der Programmcode 26 der ersten Funktionseinheit 1 durch den Parser 24 dahingehend analysiert, ob die Änderung der Funktionsweise einen Einfluss auf die Kommunikation der ersten Funktionseinheit 1 aufweist. Beispielsweise werden hierbei durch den Parser 24 Schnittstellen der ersten Funktionseinheit dahingehend analysiert, ob sich diese gegenüber dem früheren Zustand verändert haben. Alternativ oder zusätzlich kann geprüft werden, ob sich ein Signalformat, insbesondere ein Datenformat, Maßeinheiten übermittelter Daten, eine Syntax oder ein Protokoll, der Kommunikation durch die erste Funktionseinheit 1 gegenüber dem früheren Zustand verändert hat. Ist dies der Fall, so ist das Auftreten einer Inkompatibilität zwischen der ersten Funktionseinheit 1 und denjenigen der mehreren Funktionseinheiten 9, welche zur Kommunikation mit der ersten Funktionseinheit 1 ausgebildet sind, sehr wahrscheinlich.

Aus diesem Grund werden in einem nächsten Schritt c) diejenigen der mehreren Funktionseinheiten 9, welche zur Kommunikation mit der ersten Funktionseinheit 1 ausgebildet sind, bestimmt beziehungsweise ermittelt. Diese Funktionseinheiten werden vorliegend als zweite Funktionseinheiten 2 bezeichnet. Mit anderen Worten werden alle diejenigen der mehreren Funktionseinheiten 9, welche zur Kommunikation mit der ersten Funktionseinheit 1 ausgebildet sind, als zweite Funktionseinheiten 2 bestimmt beziehungsweise ermittelt. Der Schritt c) ist in FIG 3 als Schritt S3 dargestellt.

Gemäß FIG 1 weisen die zweiten Funktionseinheiten 2 eine jeweilige Verbindung 4 zur Kommunikation mit der ersten Funktionseinheit 1 auf. Mit anderen Worten können diejenigen der mehreren Funktionseinheiten 9, welche eine jeweilige Verbindung 4 zur Kommunikation mit der ersten Funktionseinheit 1 aufweisen, als die zweiten Funktionseinheiten 2 bestimmt beziehungsweise ermittelt werden.

Anschließend wird in einem Schritt d) ermittelt, ob eine Inkompatibilität zwischen der ersten Funktionseinheit 1 und einer oder mehreren der zweiten Funktionseinheiten 2 vorliegt. Der Schritt d) ist in FIG 3 als Schritt S4 dargestellt. Insbesondere wird bestimmt, mit welchen der zweiten Funktionseinheiten 2 eine Inkompatibilität der ersten Funktionseinheit 1 vorliegt. Vorteilhafterweise wird bestimmt, ob sich aus der geänderten Funktionsweise der ersten Funktionseinheit 1 eine Inkompatibilität zwischen der ersten Funktionseinheit 1 und zumindest einer der zweiten Funktionseinheiten 2 ergibt. Es kann in einer jeweiligen Prüfung zwischen jeder der zweiten Funktionseinheiten 2 und der ersten Funktionseinheit 1 für jede der zweiten Funktionseinheiten 2 einzeln bestimmt werden, ob eine solche Inkompatibilität vorliegt.

In einem weiteren Schritt, welcher beispielsweise als Schritt e) bezeichnet werden kann, werden dritte Funktionseinheiten der mehreren Funktionseinheiten 9 bestimmt, welche zur Kommunikation mit einer der zweiten Funktionseinheiten 2 ausgebildet sind. Der Schritt e) ist in FIG 3 als Schritt S5 dargestellt. Gemäß FIG 1 weisen die dritten Funktionseinheiten 3 jeweils eine Verbindung 5 zum Kommunizieren mit einer der zweiten Funktionseinheiten 2 auf. Dabei werden insbesondere alle diejenigen der mehreren Funktionseinheiten 9, welche zur Kommunikation mit zumindest einer der zweiten Funktionseinheiten 2 ausgebildet sind, als dritte Funktionseinheiten 3 bestimmt beziehungsweise ermittelt. Insbesondere werden alle diejenigen der mehreren Funktionseinheiten 9, welche eine jeweilige Verbindung 5 zu einer der zweiten Funktionseinheiten 2 aufweisen, als dritte Funktionseinheiten 3 ermittelt beziehungsweise bestimmt.

In einem weiteren Schritt, der auch als Schritt f) bezeichnet werden kann, wird für jede der dritten Funktionseinheiten 3 bestimmt, ob eine Inkompatibilität der jeweiligen dritten Funktionseinheit 3 und der ersten Funktionseinheit 1 oder der jeweiligen dritten Funktionseinheit 3 und einer der zweiten Funktionseinheiten 2 vorliegt. Dabei wird insbesondere nur zwischen der jeweiligen dritten Funktionseinheit 3 und denjenigen der Funktionseinheiten 2, mit welchen die jeweilige dritte Funktionseinheit 3 eine jeweilige Verbindung 5 aufweist, auf die Inkompatibilität geprüft. Der Schritt f) ist in FIG 3 als Schritt S6 dargestellt. Insbesondere wird in dem Schritt f) bestimmt, ob sich aus der geänderten Funktionsweise der ersten Funktionseinheit 1 eine Inkompatibilität zwischen der ersten Funktionseinheit 1 und einer jeweiligen dritten Funktionseinheit 3 oder zwischen der jeweiligen dritten Funktionseinheit 3 und einer der zweiten Funktionseinheiten 2 ergibt. Auf diese Weise kann eine wellenförmige Ausbreitung von Inkompatibilitäten, welche auf eine Funktionsänderung der ersten Funktionseinheit 1 zurückzuführen ist, effizient erkannt. Eine solche wellenartige Ausbreitung wird auch als Rippel-Effekt bezeichnet. Selbstverständlich kann die Prüfung noch um weitere Funktionseinheiten, beispielsweise vierte Funktionseinheiten, fünfte Funktionseinheiten oder sechste Funktionseinheiten, erweitert werden, wobei diese Prüfung analog abläuft, wie bei den dritten Funktionseinheiten 3. Aus diesem Grunde ist dies hier nicht weiter beschrieben.

Die vorliegend offenbarten Schritte a) bis f) werden vorliegend für jede der mehreren Funktionseinheiten 9 aus Sicht der ersten Funktionseinheit 1 durchgeführt. Mit anderen Worten nimmt jede der mehreren Funktionseinheiten 9 bei einer jeweiligen Durchführung der Schritte a) bis f) für die jeweilige Funktionseinheit die Rolle der ersten Funktionseinheit 1 ein. Es wird somit jede der mehreren Funktionseinheiten 9 auf eine jeweilige Änderung ihrer jeweiligen Funktionsweise geprüft. Zudem wird jede der mehreren Funktionseinheiten 9, deren Funktionsweise sich geändert hat, auf eine jeweilige wellenförmige Ausbreitung von Inkompatibilitäten hin untersucht. Ein Ergebnis beim Erkennen der Inkompatibilitäten zwischen den Funktionseinheiten 9 kann einem Nutzer ausgegeben werden. Beispielsweise kann im Rahmen dieses Ergebnisses ausgegeben werden, welche der mehreren Funktionseinheiten 9 eine Aktualisierung beziehungsweise eine Anpassung an eine geändert Funktionseinheit 9 benötigen, um Inkompatibilitäten zu beheben.

Außerdem können automatisch Maßnahmen zum Eindämmen der Inkompatibilitäten getroffen werden. Die Maßnahmen zum Eindämmen jeweiliger Inkompatibilitäten sind beispielsweise: Das Anpassen der jeweiligen Kommunikation (beispielweise Anpassen einer Schnittstelle oder des Signalformats, insbesondere eines Datenformats, Maßeinheiten übermittelter Daten, einer Syntax oder eines Protokolls) betroffener Funktionseinheiten 9, das Einschränken der Kommunikation zwischen den betroffenen Funktionseinheiten 9 und das Erstellen der sogenannten Brückenschnittstellen zwischen den betroffenen Funktionseinheiten 9. Derartige Brückenschnittstellen (auch mit dem Fachbegriff "intermediates" bezeichnet), können zwischen den betroffenen Funktionseinheiten 9 angeordnet werden und deren Kommunikation anpassen.

Die zuvor beschrieben Schritte a) bis f) sind in FIG 3 in einem beispielhaften Ablaufdiagramm gezeigt und sind darin durch die Schritte S1 bis S6 repräsentiert.

In der Versionsdatenbank 23 können Metadaten 27 und/oder Programmcodes 26 für jede der mehreren Funktionseinheiten 9 nach jeder Veränderung gespeichert werden. Beispielsweise wird durch die Steuereinrichtung 19 wiederholt, insbesondere periodisch oder regelmäßig, überprüft, ob sich die Funktionseinheiten 9 gegenüber einem jeweiligen vorherigen Zustand geändert haben. Jedes Mal, wenn eine Veränderung einer der Funktionseinheiten 9 vorliegt, kann der jeweils aktuelle Programmcode 26 und/oder die jeweils aktuellen Metadaten 27 durch die Bereitstellungseinheit 25 aus der Programmcodedatenbank 22 abgerufen werden und in der Versionsdatenbank 23 gespeichert werden. Auf diese Weise ist es zum Durchführen der Schritte a) bis f) vorteilhafterweise nur ein inkrementelles Abrufen der jeweiligen Programmcodes 26 der jeweils veränderten der Funktionseinheiten 9 nötig. Der jeweilige Programmcode 26 derer der Funktionseinheiten 9, die sich nicht verändert haben, kann in diesem Fall vorteilhafterweise aus der Versionsdatenbank 23 geladen werden. Auf diese Weise kann das Verfahren zum Erkennen der Inkompatibilität besonders effizient gestaltet werden. Dies gilt insbesondere dann, wenn die Steuereinrichtung 19 und die Programmcodedatenbank 22, insbesondere der Softwaremarktplatz, räumlich voneinander getrennt sind.

## Patentansprüche

1. Verfahren zum Erkennen einer Inkompatibilität zwischen mehreren Funktionseinheiten (9), wobei die mehreren Funktionseinheiten (9) eine oder mehrere Steuerfunktionen zum Steuern und/oder Überwachen einer Gerätschaft (6) gemeinsam bereitstellen und die mehreren Funktionseinheiten (9) hierzu untereinander zur Kommunikation ausgebildet sind, mit den Schritten:
b) Bestimmen, ob eine Änderung einer Funktionsweise eine Änderung einer Kommunikation bei einer ersten (1) der mehreren Funktionseinheiten (9) herbeiführt,
c) Bestimmen einer zweiten (2) der mehreren Funktionseinheiten (9), welche zur Kommunikation mit der ersten Funktionseinheit (1) ausgebildet ist, und
d) Bestimmen anhand der Kommunikation zwischen der ersten Funktionseinheit (1) und der zweiten Funktionseinheit (2), ob eine Inkompatibilität zwischen der ersten Funktionseinheit (1) und der zweiten Funktionseinheit (2) vorliegt.

2. Verfahren nach Anspruch 1, **dadurch gekennzeichnet, dass** bei dem Bestimmen nach Schritt d) dann eine Inkompatibilität zwischen der ersten Funktionseinheit (1) und der zweiten Funktionseinheit (2) erkannt wird, wenn eine Inkompatibilität zwischen jeweiligen Schnittstellen der ersten Funktionseinheit (1) und der zweiten Funktionseinheit (2) vorliegt und/oder einem Signalformat der Kommunikation vorliegt.

3. Verfahren nach Anspruch 1 oder 2, **gekennzeichnet, durch** einen zusätzlichen Schritt: a) Bestimmen, ob die Änderung der Funktionsweise bei der ersten Funktionseinheit (1) gegenüber einem früheren Zustand vorliegt.

4. Verfahren nach Anspruch 3, **dadurch gekennzeichnet, dass** ein Erkennen der Änderung der Funktionsweise der ersten Funktionseinheit (1) bei dem Bestimmen gemäß Schritt a) basierend auf Metadaten (27), insbesondere einer Versionsnummer, der ersten Funktionseinheit (1) erfolgt.

5. Verfahren nach Anspruch 3 oder 4, **dadurch gekennzeichnet, dass** ein Programmcode (26) für die erste Funktionseinheit (1) nur dann von einer Programmcodedatenbank (22) geladen wird, wenn in dem Schritt a) erkannt wurde, dass eine Änderung der Funktionsweise der ersten Funktionseinheit (1) vorliegt.

6. Verfahren nach einem der vorherigen Ansprüche, **dadurch gekennzeichnet, dass** der Schritt b) gemäß Anspruch 1 und/oder der Schritt a) gemäß Anspruch 3 zumindest teilweise durch einen Parser (24) durchgeführt wird.

7. Verfahren nach einem der vorherigen Ansprüche, **dadurch gekennzeichnet, dass** eine Versionshistorie, welche zumindest eine Beschreibung der Funktionsweise der ersten Funktionseinheit (1) vor und nach der Änderung der Funktionsweise beinhaltet, in einer Versionsdatenbank (23) gespeichert wird.

8. Verfahren nach einem der vorherigen Ansprüche, **dadurch gekennzeichnet, dass** ein jeweiliger Programmcode (26) für jede der mehreren Funktionseinheiten (9) von einer Programmcodedatenbank (22) wiederholt geladen wird und nach jedem Laden zumindest die Schritte b) bis d) durchgeführt werden.

9. Verfahren nach einem der vorherigen Ansprüche, **dadurch gekennzeichnet, dass**
- eine dritte (3) der mehreren Funktionseinheiten (9) bestimmt wird, welche zur Kommunikation mit der zweiten Funktionseinheit (2) ausgebildet ist, und
- bestimmt, ob eine Inkompatibilität zwischen der ersten Funktionseinheit (1) und der dritten Funktionseinheit (3) oder der zweiten Funktionseinheit (2) und der dritten Funktionseinheit (3) vorliegt.

10. Verfahren nach einem der vorherigen Ansprüche, **dadurch gekennzeichnet, dass** der Schritt a) wiederholt, insbesondere periodisch, durchgeführt wird.

11. Verfahren nach einem der vorhergehenden Ansprüche, **dadurch gekennzeichnet, dass** die genannten Schritte aus Sicht der ersten Funktionseinheit (1) für jede der mehreren Funktionseinheiten (9) durchgeführt werden.

12. Verfahren nach Anspruch 11, **dadurch gekennzeichnet, dass** eine Übersicht über die jeweiligen Inkompatibilitäten jeder der mehreren Funktionseinheiten (9) erzeugt wird und automatisch Maßnahmen zum Eindämmen jeweiliger Inkompatibilitäten getroffen werden, insbesondere ein Anpassen der jeweiligen Kommunikation, ein Einschränken der jeweiligen Kommunikation oder ein Erstellen einer Brückenschnittstelle.

13. Steuereinrichtung (19) mit Mitteln zum Erkennen einer Inkompatibilität zwischen Funktionseinheiten (9), wobei die Mittel eingerichtet sind, ein Verfahren nach einem der Ansprüche 1 bis 12 durchzuführen.

14. System (18) umfassend
- eine Gerätschaft (6),
- zumindest eine Funktionsinstanz (21) zum Bereitstellen von mehreren Funktionseinheiten (9), wobei die mehreren Funktionseinheiten (9) dazu ausgebildet sind, eine oder mehrere Steuerfunktionen zum Steuern und/oder Überwachen der Gerätschaft (6) gemeinsam bereitzustellen und hierzu untereinander zu kommunizieren,
- einer Programmcodedatenbank (22), welche dazu ausgebildet ist, einen jeweiligen Programmcode (26) für jede der mehreren Funktionseinheiten (9) zur Programmierung der zumindest einen Funktionsinstanz (21) bereitzuhalten, und
- einer Steuereinrichtung (19) nach Anspruch 13.

15. Computerprogramm, welches direkt in einen Speicher einer Steuereinrichtung (19) ladbar ist, mit Programmcodemitteln, um die Schritte des Verfahrens nach einem der Ansprüche 1 bis 12 auszuführen, wenn das Programm in der Steuereinrichtung (19) ausgeführt wird.

16. Speichermedium mit darauf gespeicherten elektronisch lesbaren Steuerinformationen, welche zumindest ein Computerprogramm nach Anspruch 15 umfassen und derart ausgestaltet sind, dass sie bei Verwendung des Speichermediums in einer Steuereinrichtung (19) ein Verfahren nach einem der Ansprüche 1 bis 12 durchführen.

17. Datenstrom an Daten zum Erkennen einer Inkompatibilität zwischen Funktionseinheiten (9), wobei der Datenstrom zumindest teilweise mittels eines Verfahrens nach einem der Ansprüche 1 bis 12 gewonnen wurde.
